# EUROPÄISCHE PATENTSCHRIFT

(11) **EP 2 354 611 B1**
(45) Veröffentlichungstag und Bekanntmachung des Hinweises auf die Patenterteilung: **01.04.2015**
(21) Anmeldenummer: 11000078.3
(22) Anmeldetag: 07.01.2011
(51) Int. Cl.: F16K 31/50, F16K 41/04, F16K 3/02, F16K 7/20

(54) **Spindellagerung**
Spindle bearing
Logement de broche

(30) Priorität: 18.01.2010 AT 532010
(43) Veröffentlichungstag der Anmeldung: 10.08.2011
(73) Patentinhaber: E. Hawle Armaturenwerke GmbH, 4840 Vöcklabruck (AT)
(72) Erfinder: Berger, Christian, 4650 Lambach (AT); Mayr, Philipp, 4664 Oberweis (AT)
(74) Vertreter: Puchberger, Peter

(56) Entgegenhaltungen:
- WO-A1-2004/003413
- JP-A- 6 257 679
- US-A- 1 370 875
- US-A- 1 625 698
- US-A- 2 109 801
- US-A- 3 429 555

## Beschreibung

Die Erfindung betrifft eine Absperrarmatur gemäß Oberbegriff des Anspruchs 1 sowie eine Spindellagerung gemäß Oberbegriff von Anspruch 25, wie beispielsweise aus US-A-1 625 698, US-A-1 370 875 oder auch aus JP-A-6-257679 bekannt.

Aus dem Dokument EP 1 516 138 B1 sind Absperrarmaturen für Rohrleitungen bekannt, die über ein Armaturengehäuse mit einer Schieberkammer und einem Strömungskanal verfügen, wobei der Strömungskanal durch ein mehrteilig ausgebildetes Absperrelement sperrbar ist. Das Absperrelement ist mit einer Spindelmutter verbunden, die über Gewindeeingriff mit einer Schieberspindel drehverbunden ist.

Das oben genannte Absperrelement wird im Allgemeinen mehrteilig ausgeführt und umfasst typischerweise an seinem Umfang ein weichdichtendes Material. Außerdem kann es mit Versteifungsrippen ausgebildet sein, um den Druck des abzusperrenden Mediums standzuhalten. Der Strömungskanal kann im Bereich des Absperrelements über Führungen, Schienen, Anpressflächen oder dergleichen verfügen, um eine passgenaue Einführung des Absperrelements zu ermöglichen.

Bei Betätigung der Schieberspindel wird das Absperrelement aus der Schieberkammer in den Strömungskanal bewegt. Wenn ein ausreichend starkes Drehmoment an der Schieberspindel angreift, wird das Absperrelement mit ausreichender Kraft in den Strömungskanal gepresst, um den Strömungskanal abzusperren. Dafür kann ein durchaus beträchtliches Drehmoment erforderlich sein, da das abzusperrende Medium im Allgemeinen unter Druck steht. Ähnliche Vorrichtungen sind aus den Dokumenten DE 527 748 und DE 1 916 347 A1 bekannt und gehören zum Stand der Technik. Derartige Armaturen sind im allgemeinen mehrteilig und aus metallischen Bauteilen aufgebaut, um die auftretenden Kräfte aufnehmen zu können.

Da derartige Absperrarmaturen im Allgemeinen manuell betätigt werden, besteht ein Problem darin, das passende Drehmoment für die Betätigung der Schieberspindel zu wählen. Einerseits soll es groß genug sein, um den Strömungskanal sicher abzudichten, andererseits kann die Ausübung eines zu hohen Anpressdrucks auf das Absperrelement eine Beschädigung des Absperrelements oder Teilen desselben verursachen. Auch der Strömungskanal selbst kann durch das Absperrelement bei einer Betätigung der Schieberspindel mit einem zu hohen Drehmoment beschädigt werden. Schließlich kann auch eine leichte Verformung des Absperrelements zu einer Beeinträchtigung der Dichtwirkung führen, welche möglicherweise erst im Laufe der Benutzung auftritt. Eine Überschreitung des erlaubten Anpressdrucks ist demnach jedenfalls zu vermeiden.

Zur Begrenzung des auf die Schieberspindel ausgeübten Drehmoments ist aus dem Stand der Technik bekannt, eine Rutschkupplung vorzusehen. Dabei wird im Bereich der Spindellagerung ein Kupplungselement vorgesehen, welches den oberen Teil der Schieberspindel, an dem das Drehmoment angreift, mit dem unteren Teil der Schieberspindel, welches das Drehmoment an die Spindelmutter des Absperrelements überträgt, verbindet. Dieses Kupplungselement kann beispielsweise in Form eines flexiblen Speichenrads ausgeführt sein. Bei Einwirkung eines zu hohen Drehmoments rutscht das Speichenrad durch und leitet das Drehmoment ab.

Ein bekannter Nachteil derartiger Rutschkupplungen besteht darin, dass beim Durchrutschen, also beim Eintreten der Sicherungswirkung, starker Verschleiß der Kupplungselemente auftritt. So kann beispielsweise in der Vorrichtung, die in DE 44 42 736 A1 beschrieben ist, damit gerechnet werden, dass die Speichen des beschriebenen Speichenrads bei wiederholter Verwendung brüchig werden und ihre Flexibilität verlieren.

Eine ähnliche Vorrichtung ist aus EP 20 20 543 A1 bekannt, in der ebenfalls eine Rutschkupplung als Sicherungselement beschrieben ist, wobei die Rutschkupplung in Form von mehreren radial federnden Wandbereichen ausgebildet ist. Auch hier ist die Haltbarkeit dieser Vorrichtung ein Problem, da die beschriebene Absperrarmatur unter ungünstigen Umweltbedingungen funktionstüchtig bleiben muss, was insbesondere die Handhabung von heißen, ätzenden, und/oder unter Druck stehenden Medien umfasst. Insbesondere soll die Vorrichtung eine zuverlässige Absperrung im Trinkwasserbereich, aber auch für den Heißwasserbereich im industriellen Anlagenbau, der Gasversorgung und im Abwasserbereich ermöglichen. Die Verwendung von flexiblen Materialien, insbesondere Elastomeren, soll auf das Notwendigste beschränkt werden.

Ein weiteres wichtiges Kriterium einer Vorrichtung zur Limitierung des auf das Absperrelement wirkenden Drehmoments ist, dass eine derartige Vorrichtung möglichst einfach und platzsparend in den bestehenden Gehäusehals der Absperrarmatur integriert werden kann. Auch dieses Kriterium ist bei der Verwendung einer Rutschkupplung nicht erfüllt.

Eine derartige Sicherungsvorrichtung kann insbesondere zerlegbar, also mehrteilig, ausgeführt sein, um einen einfachen Ein- und Ausbau vor Ort zu ermöglichen. Eine seitliche Montage durch das Anschlussrohr ist oft nicht möglich, deshalb muss der Zusammenbau oft von oben (durch den Gehäusehals) durchgeführt werden.

Es ist deshalb Aufgabe der vorliegenden Erfindung, eine Sicherungsvorrichtung zur Limitierung des bei der Betätigung der Absperrarmatur auf das Absperrelement wirkenden Drehmoments zu offenbaren. Diese Sicherungsvorrichtung soll möglichst robust, wartungsfrei, ökonomisch, und platzsparend sein. Die Vorrichtung soll korrosionsfest sein und über lange Zeit sicher funktionieren.

Diese Aufgabe wird erfindungsgemäß dadurch gelöst, dass die Spindellagerung eine, den Anpressdruck des Absperrelements auf die Anpressfläche des Strömungskanals limitierende Bremsvorrichtung umfasst, die erfindungsgemäss so ausgeführt ist, dass sie eine, die Schieberspindel aufnehmende Bremsscheibe sowie eine, mit dieser Bremsscheibe und dem Gehäusehals formschlüssig verbundene Spindelauflage umfasst. Hierbei ist es ein wesentlicher Teil der Erfindung, dass sowohl die Bremsscheibe mit der Spindelauflage, als auch die Spindelauflage mit dem Gehäusehals formschlüssig verbunden ist. Die genaue Ausführung dieses Formschlusses ist nicht Gegenstand der Erfindung und kann beispielsweise durch radiale Ausnehmungen, axiale Füße oder in Form eines Zahnkranzes erfolgen.

Die Bremsscheibe selbst kann eine Bremsfläche aufweisen, die an einen Spindelbund der Schieberspindel angrenzt. Durch diese Bremsfläche kann die Bremsscheibe bei Vorliegen eines ausreichenden Anpressdrucks in kraftschlüssige Verbindung mit der Schieberspindel treten.

Es kann weiters ein, die Lage der Bremsscheibe fixierendes Befestigungsmittel vorgesehen sein, welches insbesondere in Form eines Dichtungsträgers ausgeführt sein kann. Ein derartiger Dichtungsträger kann zu diesem Zweck eine Ausnehmung zur Aufnahme der Schieberspindel aufweisen.

Die erwähnte Bremsscheibe kann selbstverständlich eine vom Kreis abweichende, eckige und insbesondere hexagonale Form aufweisen, um eine optimale formschlüssige Verbindung mit einer entsprechend geformten Ausnehmung der Spindelauflage zu erreichen. Die erwähnte Bremsfläche der Bremsscheibe kann gewölbt oder kugelig geformt sein, um eine außermittige Stellung des Absperrelements bei einseitiger Druckbeaufschlagung kompensieren zu können. In diesem Fall ist es vorteilhaft, wenn der Spindelbund der Schieberspindel an seiner der Bremsfläche der Bremsscheibe zugewandten Oberfläche ebenso gewölbt oder kugelig geformt ist.

Die Spindelauflage kann zur Aufnahme der Schieberspindel eine Öffnung und zur Aufnahme der Bremsscheibe eine entsprechende Aussparung aufweisen. Wie oben erwähnt ist es insbesondere vorteilhaft, wenn die Aussparung der Spindelauflage eine Form aufweist, die eine formschlüssige Verbindung mit der Bremsscheibe erlaubt.

Um eine direkte Ableitung der Anpresskraft in den Gehäusehals zu ermöglichen, kann die Spindelauflage an ihrem äußeren Umfang über einen Formschluss mit dem Armaturengehäuse verfügen, der insbesondere in Form einer Verzahnung ausgeführt sein kann, die in eine dazu passende Gegenverzahnung am inneren Umfang des Armaturengehäuses eingreift. Es können aber auch andere formschlüssige und/oder kraftschlüssige Verbindungen erfindungsgemäß vorgesehen sein, beispielsweise axiale Füße oder radiale Ausnehmungen. Insbesondere kann die Verzahnung in Form sägezahnförmiger Laschen und die Gegenverzahnung in Form korrespondierender sägezahnförmiger Ausnehmungen ausgebildet sein.

Der Dichtungsträger kann in beliebiger Form am Armaturengehäuse befestigt sein. Insbesondere kann ein Bajonettverschluss zur Befestigung des Dichtungsträgers am Armaturengehäuse vorgesehen sein. Ein derartiger Bajonettverschluss kann durch Aufnahmefedern am äußeren Umfang des Dichtungsträgers und diesen zugeordneten Aufnahmenuten am inneren Umfang des Gehäusehalses gebildet sein.

Um ein Verdrehen des Dichtungsträgers zu verhindern, kann der Dichtungsträger an seinem Umfang eine Verdrehsicherung aufweisen. Eine derartige Verdrehsicherung kann in Form von Verriegelungselementen realisiert sein, die durch Ausnehmungen des Gehäusehalses bzw. Ausnehmungen der Spindelauflage hindurchragen.

Derartige Verriegelungselemente können insbesondere in Form von Schrauben, Stiften oder Bolzen ausgeführt sein.

Der Dichtungsträger kann über einen inneren Dichtungsträgerabschnitt zur Abdichtung gegenüber der Schieberspindel sowie einen äußeren Dichtungsträgerabschnitt zur Abdichtung gegenüber dem Armaturengehäuse verfügen. In diesem Fall kann der Dichtungsträger an seinem inneren Dichtungsträgerabschnitt über mindestens einen Innendichtsatz, sowie an seinem äußeren Dichtungsträgerabschnitt über mindestens einen Außendichtsatz verfügen. Derartige Innendichtsätze oder Außendichtsätze können insbesondere in Form einer paarweisen Anordnung von Dichtungsringen gebildet werden, wobei die Anzahl der innen- bzw. außenliegenden Dichtungen nicht gleich sein muss.

Zur Führung des Absperrelements in der Schieberkammer können Führungen in Form von Vertiefungen, Nuten, Leisten oder dergleichen vorgesehen sein. In diesem Fall empfiehlt es sich, am Absperrelement Führungsfortsätze in Form von Laschen, Federn oder dergleichen vorzusehen.

Weitere Merkmale und bevorzugte Weiterbildungen dieser Erfindung ergeben sich aus den abhängigen Ansprüchen.

Ein erfindungsgemäßes Ausführungsbeispiel wird anhand der Figuren beschrieben. Es zeigen:
Fig. 1 einen Querschnitt einer erfindungsgemäßen Absperrarmatur im geschlossenen Zustand entlang der Symmetrieachse 1-1 in Fig. 2;
Fig. 2 einen Querschnitt durch die Absperrarmatur aus Fig. 1 entlang der Symmetrieachse II-II;
Fig. 3 eine dreidimensionale Darstellung der Absperrarmatur aus Fig. 1 mit Blick auf die erfindungsgemäße Bremsvorrichtung, wobei der Dichtungsträger und die obere Abdeckung entfernt wurden;
Fig. 4 eine dreidimensionale Darstellung einer in der Bremsvorrichtung der Absperrarmatur verwendeten Bremsscheibe;
Fig. 5 eine dreidimensionale Darstellung eines in der Bremsvorrichtung der Absperrarmatur verwendeten Zahnkranzes; sowie
Fig. 6 eine dreidimensionale Darstellung eines in der Absperrarmatur verwendeten Dichtungsträgers.

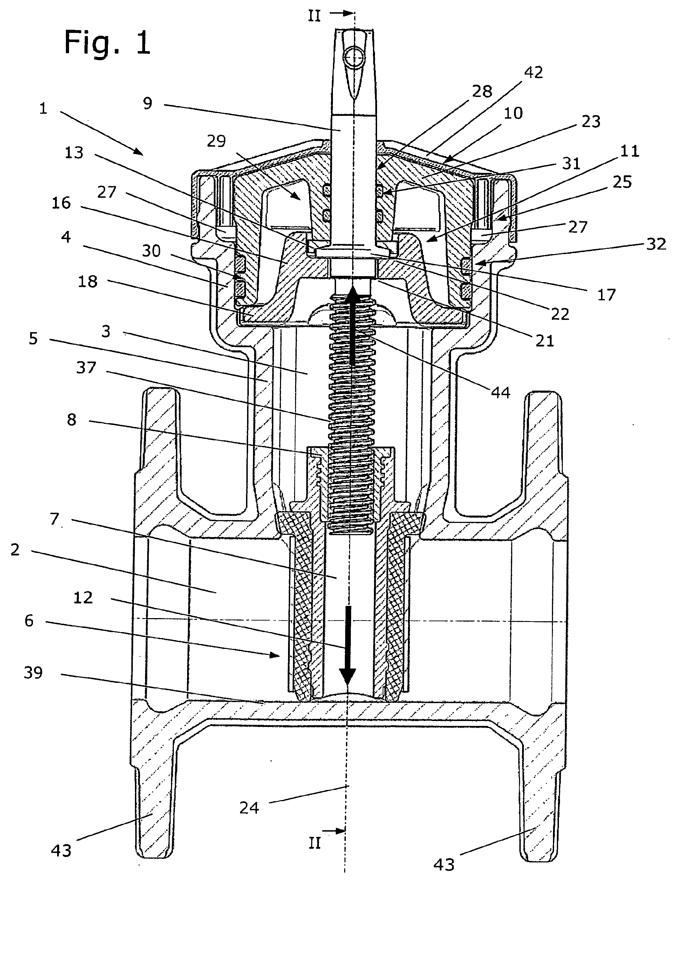

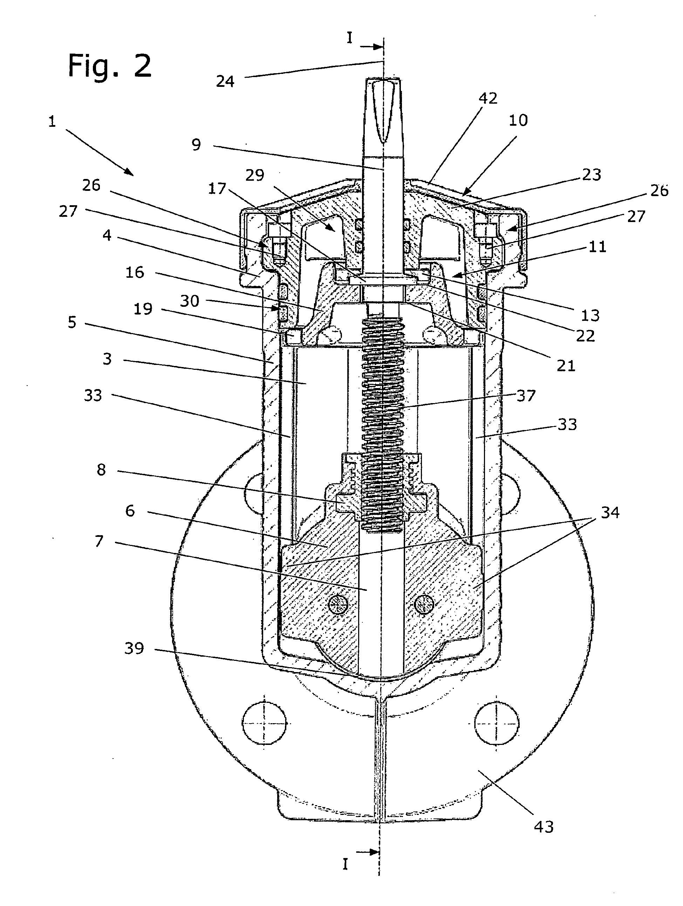

Die Fig. 1 und 2 zeigen eine Ausführungsform einer erfindungsgemäßen Absperrarmatur 1, wobei in Fig. 1 ein Querschnitt entlang der Symmetrieachse l-l der Fig. 2 und in Fig. 2 ein Querschnitt der Symmetrieachse ll-ll aus Fig. 1 gezeigt ist. Die erfindungsgemäße Absperrarmatur 1 umfasst ein Armaturengehäuse 5, welches einen Strömungskanal 2, eine Schieberkammer 3 und einen Gehäusehals 4 ausbildet. Der Strömungskanal 2 kann insbesondere für beidseitige Druckbeaufschlagung ausgelegt sein und an seinen Enden über Befestigungsmittel zur Verbindung mit Anschlussrohren verfügen. Im vorliegenden Ausführungsbeispiel sind die Befestigungsmittel in Form von Endflanschen 43 ausgeführt, es können jedoch die verschiedensten Befestigungsmittel ohne Einschränkung der Erfindung gewählt werden. Die Schieberspindel 9 durchragt das Armaturengehäuse im Bereich des Gehäusehalses 4 und der Schieberkammer 3 und ist über ein Außengewinde 37 mit der Spindelmutter 8 eines Absperrelements 6 drehverbunden. Bei Betätigung der Schieberspindel 9 wird das Absperrelement 6 entlang der Symmetrieachsen I bzw. II nach oben oder unten bewegt. Dazu verfügt das Absperrelement 6 über eine, an die Schieberspindel 9 angepasste Öffnung 7 sowie über Führungsfortsätze 34, die in Führungen 33 der Schieberkammer 3 eingreifen, und die Bewegung des Absperrelements stabilisieren. Die genaue Ausführung des Absperrelements ist nicht Gegenstand dieser Erfindung.

Die Schieberspindel 9 wird im Bereich des Gehäusehalses 4 durch eine Spindellagerung 10 in Position gehalten. Die Spindellagerung umfasst die Bremsvorrichtung 11 und den Dichtungsträger 23. Die Schieberspindel 9 weist einen Spindelbund 17 auf, der in Form eines umlaufenden Ringwulstes ausgeführt ist.

Die Bremsvorrichtung 11 umfasst eine Spindelauflage 16 und eine Bremsscheibe 13. Die Spindelauflage 16 ist glockenförmig ausgeführt, verfügt an ihrem äußeren Umfang über eine Verzahnung 18, und weist eine Öffnung 21 zur Aufnahme der Schieberspindel 9 auf. Im Bereich der Öffnung 21 verfügt die Spindelauflage 16 über eine Aussparung 22, welche zur Auflage des Spindelbunds 17 der Schieberspindel 9 dient. Weiters umfasst die Bremsvorrichtung 11 die Bremsscheibe 13, die über eine Ausnehmung 14 zur Aufnahme der Schieberspindel 9 verfügt. Die Bremsscheibe 13 umfasst weiters eine Bremsfläche 15, die in direktem Kontakt zum Spindelbund 17 steht. An ihrem äußeren Umfang ist die Bremsscheibe 13 formschlüssig mit der Spindelauflage 16 verbunden. Die Spindelauflage 16 übernimmt zwei Funktionen: Erstens erlaubt sie, zusammen mit dem Dichtungsträger 23, die axiale Lagerung der Schieberspindel 9. Zweitens übernimmt sie die Kraftableitung über die Bremsvorrichtung 11 in das Armaturengehäuse 5, wie weiter unten beschrieben ist.

Der Dichtungsträger 23 verfügt ebenfalls über eine, die Schieberspindel 9 aufnehmende Ausnehmung 28 und fixiert die Position der Bremsscheibe 13 und der Schieberspindel 9. Der Dichtungsträger 23 verfügt weiters über einen Innendichtsatz 31 im Bereich des inneren Dichtungsträgerabschnitts 29 sowie einen Außendichtsatz 32 im Bereich des äußeren Dichtungsträgerabschnitts 30. Der Dichtungsträger 23 ist in diesem Ausführungsbeispiel durch einen Bajonettverschluss 25 mit dem Gehäusehals 4 des Armaturengehäuses 5 verbunden. Zur Verdrehsicherung des Dichtungsträgers 23 ist weiters eine Verdrehsicherung 26 vorgesehen, die insbesondere in Form von Verriegelungselementen 27 ausgeführt ist. Eine Abdeckung 42 schützt den Dichtungsträger 23 und den oberen Bereich des Gehäusehalses 4 vor äußeren Einflüssen und dient weiters zur Verdrehsicherung des Dichtungsträgers 23. Zu diesem Zweck ragt die Abdeckung 42 zumindest teilweise in die Aufnahmenuten 36.

Die Spindelauflage 16 ist formschlüssig mit dem Armaturengehäuse 5 verbunden, wobei die Erfindung nicht auf eine bestimmte Ausführung dieser formschlüssigen Verbindung beschränkt ist. Bei Betätigung der Schieberspindel 9 zur Absperrung des Strömungskanals 2 wird an der Schieberspindel 9 ein entsprechendes Drehmoment angebracht, wodurch sich das Absperrelement 6 in den Figuren 1 und 2 nach unten bewegt.

Solange sich das Absperrelement 6 nicht in Schließstellung befindet, besteht Spiel zwischen dem Spindelbund 17 und der Bremsscheibe 13.

In der Schließstellung drückt das Absperrelement 6 im Bereich der Anpressfläche 39 auf die Innenwand des Strömungskanals 2 mit einem Anpressdruck 12. Analog dazu wird ein Gegendruck 44 auf die Bremsscheibe 13 durch den Spindelbund 17 ausgeübt.

Die Schieberspindel 9 drückt mit ihrem Spindelbund 17 auf die Bremsscheibe 13, die an ihrem äußeren Umfang mit der Spindelauflage 16 in Verbindung steht, und durch den Dichtungsträger 23 in Position gehalten wird. Aufgrund der Reibungskraft wird ein Teil dieses Anpressdrucks 44 auf die Spindelauflage 16 abgeleitet, die an ihrem äußeren Umfang über die Verzahnung 18 und die entsprechende Gegenverzahnung 19 mit dem Gehäusehals 4 verbunden ist. Bei Überschreiten eines gewissen Drehmoments ist der Anpressdruck 44 so stark, dass jede weitere Erhöhung des Drehmoments direkt an den Gehäusehals 4 abgeleitet wird. Dadurch wird einer Beschädigung des Absperrelements 6 aufgrund eines zu hohen Anpressdrucks entgegengewirkt. Der an das Absperrelement 6 bzw. die Anpressfläche 39 geleitete maximale Anpressdruck 12 ist durch die Reibung der Bremsscheibe 13 am Spindelbund 17 bestimmt. Es ist erfindungsgemäß vorgesehen, durch eine bestimmte Formung und Materialauswahl bzw. Materialbehandlung oder Beschichtung der Bremsscheibe 13 bzw. des Spindelbundes 17 den maximal weitergeleiteten Anpressdruck 12 einzustellen.

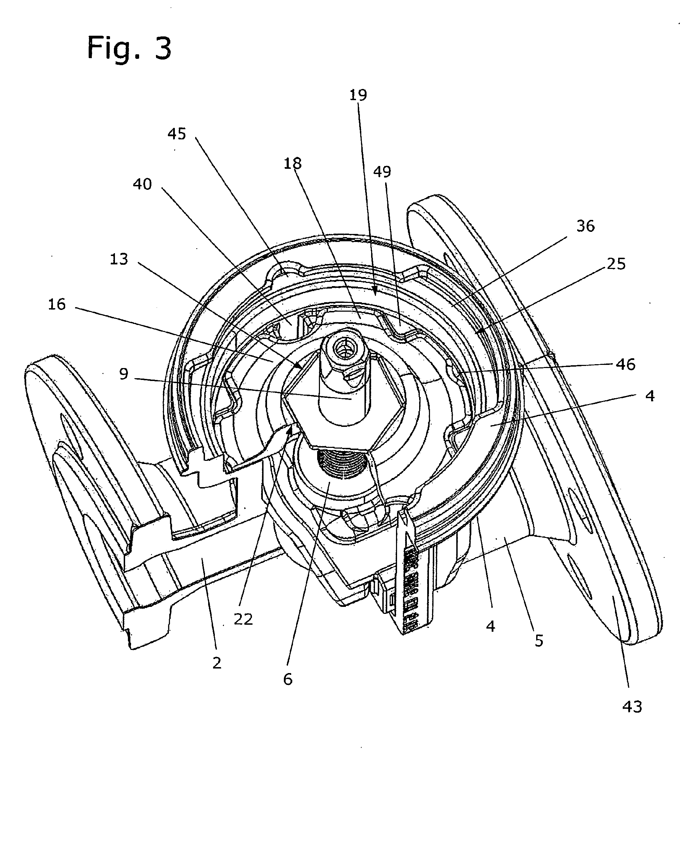

Fig. 3 zeigt eine dreidimensionale Ansicht der Absperrarmatur mit Blick auf die Bremsvorrichtung 11 bei entferntem Dichtungsträger 23 und ohne die Abdeckung 42. Die Schieberspindel 9 durchragt die Spindelauflage 16 und ist an ihrem unteren Ende mit dem Absperrelement 6 verbunden. Die Bremsscheibe 13 ist auf die Schieberspindel 9 aufgeschoben und liegt auf dem Spindelbund 17 der Schieberspindel 9 auf. Dabei fügt sich die Bremsscheibe 13 formschlüssig in die Aussparung 22 der Spindelauflage 16 ein. In diesem Ausführungsbeispiel haben die Aussparung 22 und der damit korrespondierende äußere Umfang der Bremsscheibe 13 eine hexagonale Form. Es sind jedoch auch beliebig andere formschlüssige Verbindungen zwischen der Bremsscheibe 13 und der Spindelauflage 16 erfindungsgemäß vorgesehen.

Der Dichtungsträger 23 wurde in dieser Abbildung zur besseren Sichtbarkeit der Bremsvorrichtung 11 entfernt.

Die Spindelauflage 16 verfügt an ihrem äußeren Umfang über eine formschlüssige Verbindung mit dem Gehäusehals 4, die im vorliegenden Ausführungsbeispiel in Form einer Verzahnung 18, die in eine entsprechende Gegenverzahnung 19 des Gehäusehalses 4 eingreift, realisiert ist. Durch diese Verzahnung erfolgt bei Betätigung der Schieberspindel 9 und Anwendung eines zu hohen Drehmoments eine Ableitung des Anpressdrucks 12 in den Gehäusehals 4. In diesem erfindungsgemäßen Ausführungsbeispiel ist die Verbindung zwischen der Spindelauflage 16 und dem Gehäusehals 4 in Form von vier sägezahnförmigen Laschen 49 am inneren Umfang des Gehäusehalses 4, die in korrespondierende vier Ausnehmungen 48 am äußeren Umfang der Spindelauflage 16 eingreifen, ausgeführt. Es sind jedoch auch andere formschlüssige Verbindungen zwischen der Spindelauflage 16 und dem Gehäusehals 4 erfindungsgemäß vorgesehen.

Die Spindelauflage 16 verfügt weiters an ihrem äußeren Umfang über zwei Ausnehmungen 40 sowie die Einkerbungen 46, damit gegebenenfalls aufsteigendes Medium aus dem Bereich der Spindellagerung abfließen kann.

Der obere Teil des Gehäusehalses 4 verfügt über eine Öffnung zur Aufnahme des Dichtungsträgers 23. Dieser Dichtungsträger 23 stabilisiert die Lage der Spindel 9 und der Bremsvorrichtung 11. Zur Fixierung des Dichtungsträgers 23 am Gehäusehals 4 ist ein Bajonettverschluss 25 vorgesehen, der in diesem erfindungsgemäßen Ausführungsbeispiel in Form von zwei Aufnahmenuten 36 am inneren Umfang des Gehäusehalses 4 sowie den korrespondierenden Aufnahmefedern 47 am äußeren Umfang des Dichtungsträgers 23 gebildet ist. Die Erfindung ist jedoch nicht auf diese Ausführungsform beschränkt, und erstreckt sich auch auf andere Ausführungen, beispielsweise unter der Verwendung von Schraubverbindungen, Bolzen oder Nieten. Der Gehäusehals 4 verfügt weiters über die Ausnehmungen 45 zur Aufnahme der Verriegelungselemente 27, die bei eingesetztem Dichtungsträger einer Verdrehung bzw. Lockerung des Dichtungsträgers entgegenwirken. Anstelle der gezeigten schraubenförmigen Verriegelungselemente 27 kann jede andere Ausführung der Verdrehsicherung 26 erfindungsgemäß vorgesehen sein.

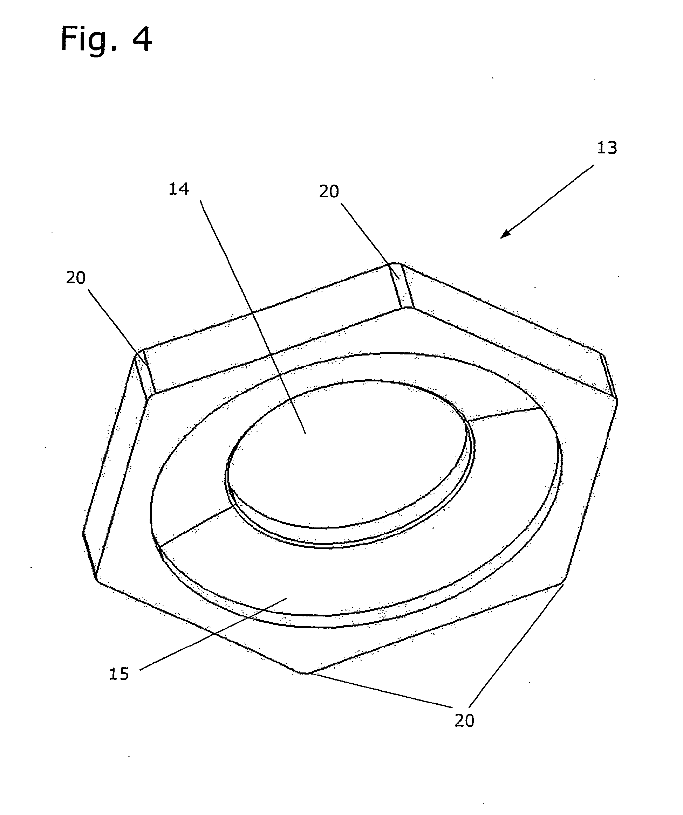

Fig. 4 zeigt eine dreidimensionale Ansicht der Bremsscheibe 13. Die Bremsscheibe 13 verfügt über eine Ausnehmung 14 zur Aufnahme der Schieberspindel 9. Rund um die Ausnehmung 14 befindet sich die Bremsfläche 15, die in eingebautem Zustand in Kontakt mit dem Spindelbund 17 steht. Um eine bessere Übertragung des Anpressdrucks auf die Bremsscheibe zu gewährleisten, ist es vorteilhaft, die Bremsfläche 15 und die damit korrespondierende Oberfläche des Spindelbunds 17 in leicht gewölbter oder kugeliger Form auszuführen, wie dies im vorliegenden Ausführungsbeispiel gezeigt ist. Diese Formgebung ist vorteilhaft, aber für die erfindungsgemäße Funktion nicht unbedingt erforderlich.

Durch diese leicht gewölbte oder kugelige Form wird bei einseitiger Anpressung bzw. aussermittiger Stellung des Absperrelements 6 ein winkeliges Spiel ermöglicht.

An ihrem äußeren Umfang verfügt die Bremsscheibe 13 über Ecken 20, die eine formschlüssige Verbindung mit der Aussparung 22 der Spindelauflage 16 ermöglichen. Im vorliegenden, nicht einschränkenden Ausführungsbeispiel hat der Umfang der Bremsscheibe 13 und die damit korrespondierende Aussparung 22 eine hexagonale Form.

Zur Erhöhung der Reibung und der verbesserten Ableitung des Anpressdrucks von der Schieberspindel 9 auf die Spindelauflage 16 kann es erfindungsgemäß vorgesehen sein, die Bremsfläche 15 und/oder die Oberfläche des Spindelbunds 17 mit einer aufgerauten Oberfläche oder einer, die Reibung verbessernden Beschichtung zu versehen.

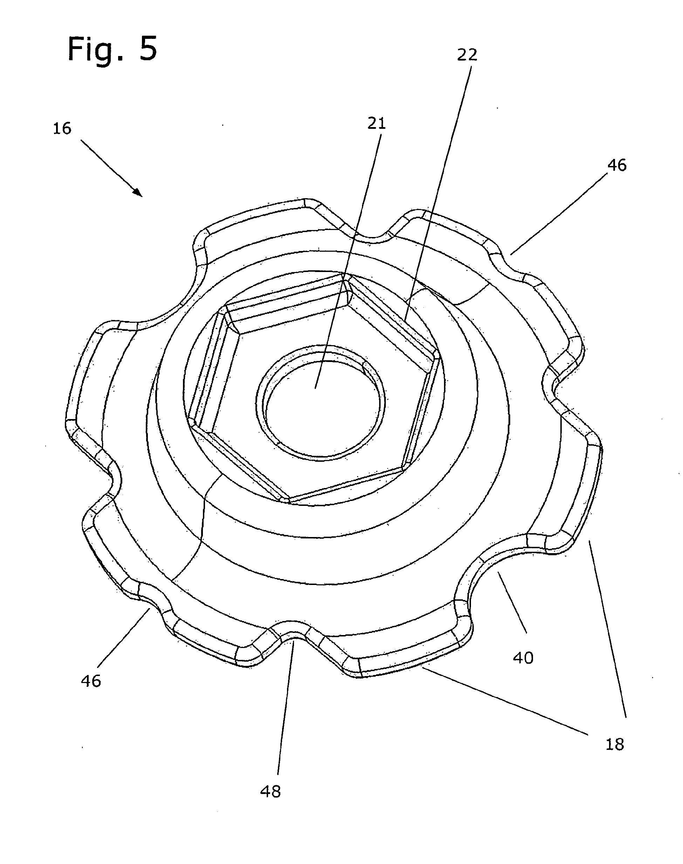

Fig. 5 zeigt eine dreidimensionale Ansicht der Spindelauflage 16, die im vorliegenden Ausführungsbeispiel in Form eines Zahnkranzes ausgeführt ist. Diese verfügt über eine Öffnung 21 zur Aufnahme der Schieberspindel 9 sowie über eine Aussparung 22 zur formschlüssigen Verbindung mit der Bremsscheibe 13. An ihrem äußeren Umfang weist die Spindelauflage 16 Verbindungselemente zur formschlüssigen Verbindung mit dem Armaturengehäuse 5 auf. Im vorliegenden Beispiel sind diese Verbindungselemente in Form einer Verzahnung 18, die mit der Gegenverzahnung 19 des Gehäusehalses 4 in Eingriff steht, ausgeführt. Die Spindelauflage 16 verfügt über die Ausnehmungen 48, die mit den korrespondierenden Laschen 49 am inneren Umfang des Gehäusehalses 4 in Eingriff stehen. Weiters verfügt die Spindelauflage 16 über die Ausnehmungen 40 und die Einkerbungen 46, damit gegebenenfalls aufsteigendes Medium wieder abfließen kann.

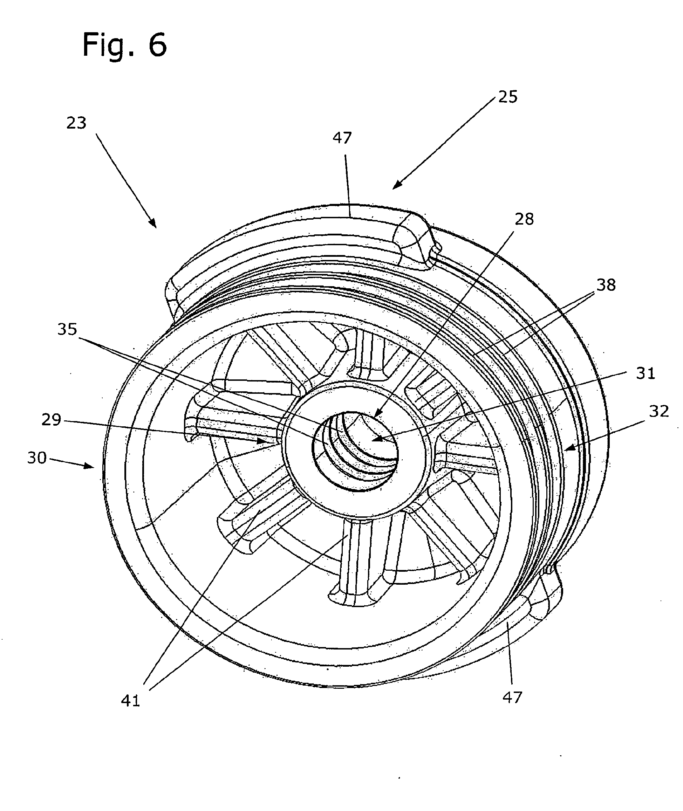

Fig. 6 zeigt eine dreidimensionale Ansicht des Dichtungsträgers 23. Der Dichtungsträger 23 verfügt über einen inneren Dichtungsträgerabschnitt 29 und einen äußeren Dichtungsträgerabschnitt 30. Der innere Dichtungsträgerabschnitt 29 weist eine Ausnehmung 28 zur Aufnahme der Schieberspindel 9 auf. Am inneren Umfang des inneren Dichtungsträgerabschnitts 29 ist ein Innendichtsatz 31 angebracht, der insbesondere durch eine paarweise Anordnung von Dichtungsringen 35 gebildet ist. Der innere Dichtungsträgerabschnitt 29 ist mit dem äußeren Dichtungsträgerabschnitt 30 über radial angeordnete Speichen 41 verbunden. Dadurch wird eine hohe Stabilität des Dichtungsträgers bei gleichzeitig geringer Masse erreicht. An seinem äußeren Dichtungsträgerabschnitt 30 verfügt der Dichtungsträger 23 über einen Außendichtsatz 32, der insbesondere durch eine paarweise Anordnung von Dichtungsringen 38 gebildet ist. Weiters verfügt der Dichtungsträger 23 an seinem äußeren Umfang über die Aufnahmefedern 47, die in die Aufnahmenuten 36 des Gehäusehalses 4 eingreifen und den Bajonettverschluss 25 bilden.

Die erfindungsgemäße Spindellagerung 10 der Absperrarmatur 1, welche die Bremsvorrichtung 11 und den Dichtungsträger 23 umfasst, kann auch bei anderen Aufgaben, bei denen eine Limitierung des angewandten Drehmoments erforderlich ist, wie etwa bei Ventilen zur Mengenregulierung flüssiger oder gasförmiger Medien, verwendet werden. Entsprechend beschränkt sich die vorliegende Erfindung weder auf die gezeigten Ausführungsformen noch auf die Verwendung in einer Absperrarmatur.

### Bezugszeichenliste

- 1: Absperrarmatur
- 2: Strömungskanal
- 3: Schieberkammer
- 4: Gehäusehals
- 5: Armaturengehäuse
- 6: Absperrelement
- 7: Öffnung
- 8: Spindelmutter
- 9: Schieberspindel
- 10: Spindellagerung
- 11: Bremsvorrichtung
- 12: Anpressdruck
- 13: Bremsscheibe
- 14: Ausnehmung
- 15: Bremsfläche
- 16: Spindelauflage
- 17: Spindelbund
- 18: Verzahnung
- 19: Gegenverzahnung
- 20: Ecken
- 21: Öffnung
- 22: Aussparung
- 23: Dichtungsträger
- 24: Längsachse
- 25: Bajonettverschluss
- 26: Verdrehsicherung
- 27: Verriegelungselemente
- 28: Ausnehmung
- 29: Innerer Dichtungsträgerabschnitt
- 30: Äußerer Dichtungsträgerabschnitt
- 31: Innendichtsatz
- 32: Außendichtsatz
- 33: Führungen
- 34: Führungsfortsätze
- 35: Dichtungsringe
- 36: Aufnahmenuten
- 37: Außengewinde
- 38: Dichtungsringe
- 39: Anpressfläche
- 40: Ausnehmung
- 41: Speichen
- 42: Abdeckung
- 43: Endflansche
- 44: Anpressdruck auf die Bremsscheibe
- 45: Ausnehmungen des Gehäusehalses
- 46: Einkerbungen
- 47: Aufnahmefedern
- 48: Ausnehmung
- 49: Lasche

## Patentansprüche

1. Absperrarmatur (1) für ein Strömungsmedium mit einem, einen Strömungskanal (2), eine Schieberkammer (3) und einen Gehäusehals (4) ausbildenden Armaturengehäuse (5) und mit einem, den Strömungskanal (2) sperrbaren Absperrelement (6), wobei das Absperrelement (6) mit einer Schieberspindel (9) verbunden ist und eine Spindellagerung (10) vorgesehen ist, die eine, den Anpressdruck (12) des Absperrelements (6) auf die Anpressfläche (39) des Strömungskanals (2) limitierende Bremsvorrichtung (11) mit einer die Schieberspindel (9) aufnehmenden Bremsscheibe (13) umfasst, **dadurch gekennzeichnet, dass** die Bremsvorrichtung (11) desweiteren eine mit der Bremsscheibe (13) und dem Gehäusehals (4) formschlüssig verbundene Spindelauflage (16) umfasst.

2. Absperrarmatur nach Anspruch 1, **dadurch gekennzeichnet, dass** die Bremsscheibe (13) eine, an einen Spindelbund (17) der Schieberspindel (9) angrenzende, Bremsfläche (15) aufweist.

3. Absperrarmatur nach einem der Ansprüche 1 bis 2, **dadurch gekennzeichnet, dass** ein, die Lage der Bremsscheibe (13) entlang der Längsachse (24) der Schieberspindel (9) fixierendes, Befestigungsmittel vorgesehen ist.

4. Absperrarmatur nach Anspruch 3, **dadurch gekennzeichnet, dass** das Befestigungsmittel als Dichtungsträger (23) ausgeführt ist, der eine Ausnehmung (28) zur Aufnahme der Schieberspindel (9) aufweist.

5. Absperrarmatur nach einem der Ansprüche 1 bis 4, **dadurch gekennzeichnet, dass** die Bremsscheibe (13) eine vom Kreis abweichende, insbesondere hexagonale Form aufweist.

6. Absperrarmatur nach einem der Ansprüche 2 bis 5, **dadurch gekennzeichnet, dass** die Bremsfläche (15) der Bremsscheibe (13) gewölbt oder kugelig geformt ist.

7. Absperrarmatur nach einem der Ansprüche 2 bis 6, **dadurch gekennzeichnet, dass** der Spindelbund (17) der Schieberspindel (9) an seiner der Bremsfläche (15) der Bremsscheibe (13) zugewandten Oberfläche gewölbt oder kugelig geformt ist.

8. Absperrarmatur nach einem der Ansprüche 1 bis 7, **dadurch gekennzeichnet, dass** die Spindelauflage (16) eine Öffnung (21) zur Aufnahme der Schieberspindel (9) aufweist.

9. Absperrarmatur nach einem der Ansprüche 1 bis 8, **dadurch gekennzeichnet, dass** die Spindelauflage (16) eine die Bremsscheibe (13) formschlüssig aufnehmende Aussparung (22) aufweist.

10. Absperrarmatur nach Anspruch 9, **dadurch gekennzeichnet, dass** die Aussparung (22) eine hexagonale Form aufweist.

11. Absperrarmatur nach einem der Ansprüche 1 bis 10, **dadurch gekennzeichnet, dass** die Spindelauflage (16) an ihrem äußeren Umfang eine Verzahnung (18) aufweist, die in eine dazu passende Gegenverzahnung (19) am inneren Umfang des Armaturengehäuses (5) eingreift.

12. Absperrarmatur nach Anspruch 11, **dadurch gekennzeichnet, dass** die Verzahnung (18) in Form sägezahnförmiger Laschen (49), und die Gegenverzahnung (19) in Form sägezahnförmiger Ausnehmungen (48) gebildet sind.

13. Absperrarmatur nach einem der Ansprüche 4 bis 12, **dadurch gekennzeichnet, dass** der Dichtungsträger (23) durch einen Bajonettverschluss (25) am Armaturengehäuse befestigt ist.

14. Absperrarmatur nach Anspruch 13, **dadurch gekennzeichnet, dass** der Bajonettverschluss (25) durch Aufnahmefedern (47) am äußeren Umfang des Dichtungsträgers (23) und diesen zugeordneten Aufnahmenuten (36) am inneren Umfang des Gehäusehalses (4) gebildet ist.

15. Absperrarmatur nach einem der Ansprüche 4 bis 14, **dadurch gekennzeichnet, dass** der Dichtungsträger (23) an seinem Umfang eine Verdrehsicherung (26) aufweist.

16. Absperrarmatur nach Anspruch 15, **dadurch gekennzeichnet, dass** die Verdrehsicherung (26) des Dichtungsträgers (23) Verriegelungselemente (27) umfasst, die durch Ausnehmungen (45) des Gehäusehalses (4) und/oder Ausnehmungen (40) der Spindelauflage (16) ragen, und insbesondere als Schrauben, Stifte, Nieten oder Bolzen ausgeführt sind.

17. Absperrarmatur nach einem der Ansprüche 4 bis 16, **dadurch gekennzeichnet, dass** der Dichtungsträger (23) einen inneren Dichtungsträgerabschnitt (29) sowie einen äußeren Dichtungsträgerabschnitt (30) aufweist.

18. Absperrarmatur nach Anspruch 17, **dadurch gekennzeichnet, dass** der Dichtungsträger (23) an seinem inneren Dichtungsträgerabschnitt (29) über mindestens einen Innendichtsatz (31) verfügt, der an die Schieberspindel (9) angrenzt, und an seinem äußeren Dichtungsträgerabschnitt (30) über mindestens einen Außendichtsatz (32) verfügt, der an einen inneren Umfang des Gehäusehalses (4) angrenzt.

19. Absperrarmatur nach Anspruch 18, **dadurch gekennzeichnet, dass** der Innendichtsatz (31) durch eine paarweise Anordnung von Dichtungsringen (35) gebildet ist, und der Außendichtsatz (32) durch eine paarweise Anordnung von Dichtungsringen (38) gebildet ist.

20. Absperrarmatur nach einem der Ansprüche 1 bis 19, **dadurch gekennzeichnet, dass** in der Schieberkammer (3) Führungen (33) in Form von Vertiefungen, Nuten, Leisten oder dergleichen zur Verdrehsicherung des Absperrelements (6) vorgesehen sind.

21. Absperrarmatur nach einem der Ansprüche 1 bis 20, **dadurch gekennzeichnet, dass** das Absperrelement (6) Führungsfortsätze (34) in Form von Laschen, Federn, oder dergleichen aufweist, wodurch das Absperrelement (6) verdrehsicher in der Schieberkammer (3) gelagert ist.

22. Absperrarmatur nach Anspruch 18 oder 19, **dadurch gekennzeichnet, dass** die Dichtsätze (31) und/oder (32) aus Elastomeren, Kunststoff oder aus hochtemperaturbeständigen und/oder gegen aggressive Medien beständige Materialien besteht.

23. Absperrarmatur nach einem der Ansprüche 1 bis 22, **dadurch gekennzeichnet, dass** die Bremsscheibe (13), die Schieberspindel (9), der Dichtungsträger (23) und/oder die Spindelauflage (16) aus Metall, Kunststoff oder aus hochtemperaturbeständigen und/oder gegen aggressive Medien beständigen Materialien besteht.

24. Absperrarmatur nach einem der Ansprüche 2 bis 23, **dadurch gekennzeichnet, dass** die Bremsfläche (15) eine aufgeraute Oberfläche oder eine Beschichtung zur Erhöhung der Reibung aufweist.

25. Spindellagerung (10) für die Lagerung einer, mit einem Absperrelement (6) verbundenen Schieberspindel (9) in einem Armaturengehäuse (5), wobei die Spindellagerung (10) eine Bremsvorrichtung (11) mit einer die Schieberspindel (9) aufnehmenden Bremsscheibe (13) umfasst, **dadurch gekennzeichnet, dass** die Bremsvorrichtung (11) desweiteren eine mit der Bremsscheibe (13) und dem Gehäusehals (4) formschlüssig verbundene Spindelauflage (16) umfasst.

## Claims

1. A shut-off valve (1) for a flow medium with a valve housing (5), constituting a flow channel (2), a slide valve chamber (3) and a housing neck (4), and with a shut-off element (6) capable of shutting off the flow channel (2), wherein the shut-off element (6) is connected to a slide valve spindle (9) and a spindle bearing (10) is provided, which comprises a braking device (11) with a brake disc (13) accommodating the slide valve spindle (9), said braking device limiting the contact pressure (12) of the shut-off element (6) on the contact surface (39) of the flow channel (2), **characterised in that** the braking device (11) further comprises a spindle support (16) connected in a form-fit manner to the brake disc (13) and the housing neck (4).

2. The shut-off valve according to claim 1, **characterised in that** the brake disc (13) comprises a braking surface (15) adjacent to a spindle collar (17) of the slide valve spindle (9).

3. The shut-off valve according to any one of claims 1 to 2, **characterised in that** a fixing means fixing the position of the brake disc (13) along the longitudinal axis (24) of the slide valve spindle (9) is provided.

4. The shut-off valve according to claim 3, **characterised in that** the fixing means is constituted as a seal carrier assembly (23), which comprises a recess (28) for accommodating the slide valve spindle (9).

5. The shut-off valve according to any one of claims 1 to 4, **characterised in that** the brake disc (13) has a shape diverging from the circle, in particular a hexagonal shape.

6. The shut-off valve according to any one of claims 2 to 5, **characterised in that** the braking surface (15) of the brake disc (13) is shaped arched or spherical.

7. The shut-off valve according to any one of claims 2 to 6, **characterised in that** the spindle collar (17) of the slide valve spindle (9) is shaped arched or spherical at its surface facing the braking surface (15) of the brake disc (13).

8. The shut-off valve according to any one of claims 1 to 7, **characterised in that** the spindle support (16) comprises an opening for receiving the slide valve spindle (9).

9. The shut-off valve according to any one of claims 1 to 8, **characterised in that** the spindle support (16) comprises a recess (22) accommodating the brake disc (13) in a form-fit manner.

10. The shut-off valve according to claim 9, **characterised in that** the recess (22) has a hexagonal shape.

11. The shut-off valve according to any one of claims 1 to 10, **characterised in that** the spindle support (16) comprises a tooth system (18) at its outer periphery, said tooth system engaging in a matching counter-tooth system (19) of the inner periphery of the valve housing (5).

12. The shut-off valve according to claim 11, **characterised in that** the tooth system (18) is constituted in the form of sawtooth-like tongues (49) and the counter-tooth system (19) in the form of sawtooth-like recesses (48).

13. The shut-off valve according to any one of claims 4 to 12, **characterised in that** the seal carrier assembly (23) is fixed to the valve housing by means of a bayonet lock (25).

14. The shut-off valve according to claim 13, **characterised in that** the bayonet lock (25) is constituted by locating keys (47) at the outer periphery of the seal carrier assembly (23) and locating grooves (36) assigned thereto at the lower periphery of the housing neck (4).

15. The shut-off valve according to any one of claims 4 to 14, **characterised in that** the seal carrier assembly (23) comprises an anti-rotation means (26) at its periphery.

16. The shut-off valve according to claim 15, **characterised in that** the anti-rotation means (26) of the seal carrier assembly (23) comprises locking elements (27), which project through cutouts (45) of the housing neck (4) and/or cutouts (40) of the spindle support (16), and are constituted in particular as screws, pins, rivets or bolts.

17. The shut-off valve according to any one of claims 4 to 16, **characterised in that** the seal carrier assembly (23) comprises an inner seal carrier assembly section (29) and an outer seal carrier assembly section (30).

18. The shut-off valve according to claim 17, **characterised in that** the seal carrier assembly (23) comprises on its inner seal carrier assembly section (29) at least one inner seal set (31), which lies adjacent to the slide valve spindle (9), and comprises at its outer seal carrier assembly section (30) at least one outer seal set (32), which lies adjacent to an inner periphery of the housing neck (4).

19. The shut-off valve according to claim 18, **characterised in that** the inner seal set (31) is constituted by a pairwise arrangement of sealing rings (35), and the outer seal set (32) is constituted by a pairwise arrangement of sealing rings (38).

20. The shut-off valve according to any one of claims 1 to 19, **characterised in that** guides (33) in the form of recesses, grooves, strips or suchlike are provided in the slide valve chamber (3) for the anti-rotation means of the shut-off element (6).

21. The shut-off valve according to any one of claims 1 to 20, **characterised in that** the shut-off element (6) comprises guide extensions (34) in the form of tongues, keys or suchlike, as a result of which the shut-off element (6) is mounted non-rotatably in the slide valve chamber (3).

22. The shut-off valve according to claim 18 or 19, **characterised in that** the seal sets (31) and/or (32) are made of elastomers, plastic or high temperature-resistant and/or aggressive media-resistant materials.

23. The shut-off valve according to any one of claims 1 to 22, **characterised in that** the brake disc (13), the slide valve spindle (9), the seal carrier assembly (23) and/or the spindle support (16) is made of metal, plastic or high temperature-resistant and/or aggressive media-resistant materials.

24. The shut-off valve according to any one of claims 1 to 23, **characterised in that** the braking surface (15) has a roughened surface or a coating to increase the friction.

25. A spindle bearing (10) for the seating of a slide valve spindle (9) connected to a shut-off element (6) in a valve housing (5), wherein the spindle bearing (10) comprises a braking device (11) with a brake disc (13) accommodating the slide valve spindle (9), **characterised in that** the braking device (11) also comprises a spindle support (16) connected in a form-fit manner to the brake disc (13) and the housing neck (4).

## Revendications

1. Appareil de sectionnement (1) pour un milieu d'écoulement avec un corps d'appareil (5) formant un conduit d'écoulement (2), une chambre de vanne (3) et un col de corps (4) et avec un élément de sectionnement (6) pouvant bloquer le conduit d'écoulement (2), dans lequel l'élément de sectionnement (6) est relié à une broche de vanne (9) et un logement de broche (10) est prévu qui comprend un dispositif de freinage (11) limitant la pression de serrage (12) de l'élément de sectionnement (6) sur la surface de pression (39) du conduit d'écoulement (2) avec un disque de freinage (13) recevant la broche de vanne (9) **caractérisé en ce que** le dispositif de freinage (11) comprend en outre un support de broche (16) relié par complémentarité de forme au disque de freinage (13) et au col de corps (4).

2. Appareil de sectionnement selon la revendication 1 **caractérisé en ce que** le disque de freinage (13) comporte une surface de freinage (15) adjacente à un épaulement de broche (17) de la broche de vanne (9).

3. Appareil de sectionnement selon l'une quelconque des revendications 1 à 2 **caractérisé en ce qu**' il est prévu un moyen de fixation fixant la position du disque de freinage (13) le long de l'axe longitudinal (24) de la broche de vanne (9).

4. Appareil de sectionnement selon la revendication 3 **caractérisé en ce que** le moyen de fixation est exécuté comme un porte-joint d'étanchéité (23) qui comporte un évidement (28) pour recevoir la broche de vanne (9).

5. Appareil de sectionnement selon l'une quelconque des revendications 1 à 4 **caractérisé en ce que** le disque de freinage (13) présente une forme s'écartant du cercle, en particulier hexagonale.

6. Appareil de sectionnement selon l'une quelconque des revendications 2 à 5 **caractérisé en ce que** la surface de freinage (15) du disque de freinage (13) est bombée ou de forme sphéroïdale.

7. Appareil de sectionnement selon l'une quelconque des revendications 2 à 6 **caractérisé en ce que** l'épaulement de broche (17) de la broche de vanne (9) est f bombé ou de forme sphéroïdale sur sa surface tournée vers la surface de freinage (15) du disque de freinage (13).

8. Appareil de sectionnement selon l'une quelconque des revendications 1 à 7 **caractérisé en ce que** le support de broche (16) comporte une ouverture (21) destinée à recevoir la broche de vanne (9).

9. Appareil de sectionnement selon l'une quelconque des revendications 1 à 8 **caractérisé en ce que** le support de broche (16) comporte un creux (22) recevant le disque de freinage (13) par complémentarité de forme.

10. Appareil de sectionnement selon la revendication 9 **caractérisé en ce que** le creux (22) présente une forme hexagonale.

11. Appareil de sectionnement selon l'une quelconque des revendications 1 à 10 **caractérisé en ce que** le support de broche (16) comporte une denture (18) sur sa périphérie extérieure qui vient en prise sur une denture opposée (19 adaptée à cet effet sur la périphérie intérieure du corps d'appareil (5).

12. Appareil de sectionnement selon la revendication 11 **caractérisé en ce que** la denture (18) est constituée sous la forme de languettes (49) en dents de scie et la denture opposée (19) est constituée sous la forme d'évidements (48) en dents de scie.

13. Appareil de sectionnement selon l'une quelconque des revendications 4 à 12 **caractérisé en ce que** le porte-joint d'étanchéité (23) est fixé sur le corps d'appareil par une fermeture à baïonnette (25).

14. Appareil de sectionnement selon la revendication 13 **caractérisé en ce que** la fermeture à baïonnette (25) est constituée par des ressorts de réception (47) sur la périphérie extérieure du porte-joint d'étanchéité (23) et des rainures de réception (36) affectées à ceux-ci sur la périphérie intérieure du col de corps (4).

15. Appareil de sectionnement selon l'une quelconque des revendications 4 à 14 **caractérisé en ce que** le porte-joint d'étanchéité (23) comporte sur sa périphérie une sécurité antitorsion (26).

16. Appareil de sectionnement selon la revendication 15 **caractérisé en ce que** la sécurité antitorsion (26) du porte-joint d'étanchéité (23) comprend des éléments de verrouillage (27) qui dépassent à travers les évidements (45) du col de corps (4) et/ou les évidements (40) du support de broche (16) et sont en particulier exécutés comme des vis, des tiges, des rivets ou des boulons.

17. Appareil de sectionnement selon l'une quelconque des revendications 4 à 16 **caractérisé en ce que** le porte-joint d'étanchéité (23) comporte un segment de porte-joint d'étanchéité intérieur (29) ainsi qu'un segement de porte-joint d'étanchéité extérieur (30).

18. Appareil de sectionnement selon la revendication 17 **caractérisé en ce que** le porte-joint d'étanchéité (23) dispose d'au moins un ensemble de joints intérieur (31) sur son segment de porte-joint d'étanchéité intérieur (29) qui est adjacent à la broche de vanne (9) et dispose sur son segment de porte-joint d'étanchéité extérieur (30) d'au moins un ensemble de joints extérieur (32) qui est adjacent à une périphérie intérieure du col de corps (4).

19. Appareil de sectionnement selon la revendication 18 **caractérisé en ce que** l'ensemble de joints intérieur (31) est constitué par un montage par paire d'anneaux d'étanchéité (35) et l'ensemble de joints extérieur (32) par un montage par paire d'anneaux d'étanchéité (38).

20. Appareil de sectionnement selon l'une quelconque des revendications 1 à 19 **caractérisé en ce que** dans la chambre de vanne (3) sont prévus des guidages (33) sous la forme de cavités, rainures, nervures ou éléments analogues pour assurer la sécurité antitorsion de l'élément de sectionnement (6).

21. Appareil de sectionnement selon l'une quelconque des revendications 1 à 20 **caractérisé en ce que** l'élément de sectionnement (6) comporte des prolongements de guidage (34) sous la forme de languettes, de ressorts ou d'éléments analogues au moyen desquels l'élément de sectionnement (6) est logé de façon sécurisée à la torsion dans la chambre de vanne (3).

22. Appareil de sectionnement selon la revendication 18 ou 19 **caractérisé en ce que** les ensembles de joints (31) et/ou (32) sont en élastomères, matière plastique ou en matériaux résistants aux températures élevées et/ou aux milieux agressifs.

23. Appareil de sectionnement selon l'une quelconque des revendications 1 à 22 **caractérisé en ce que** le disque de freinage (13), la broche de vanne (9), le porte-joint d'étanchéité (23) et/ou le support de broche (16) sont en métal, matière plastique ou en matériaux résistants aux températures élevées et/ou aux milieux agressifs.

24. Appareil de sectionnement selon l'une quelconque des revendications 2 à 23 **caractérisé en ce que** la surface de freinage (15) comporte une surface rugueuse ou un revêtement destiné à augmenter le frottement.

25. Logement de broche (10) pour le logement dans un corps d'appareil (5) d'une broche de vanne (9) reliée à un élément de sectionnement (6), le logement de broche (10) comprenant un dispositif de freinage (11) avec un disque de freinage (13) recevant la broche de vanne (9) **caractérisé en ce que** le dispositif de freinage (11) comprend en outre un support de broche (16) relié au disque de freinage (13) et au col de corps (4) par complémentarité de forme.
